# EUROPÄISCHE PATENTSCHRIFT

(11) **EP 1 791 617 B1**
(45) Veröffentlichungstag und Bekanntmachung des Hinweises auf die Patenterteilung: **27.05.2009**
(21) Anmeldenummer: 05789684.7
(22) Anmeldetag: 26.09.2005
(51) Int. Cl.: B01D 39/08, B01D 39/16, D04H 13/00, D04H 1/46

(54) **VERFAHREN ZUM HERSTELLEN EINER FILTERLAGE SOWIE FILTERLAGE INSBESONDERE FÜR EINEN STAUBFILTERBEUTEL EINES STAUBSAUGERS**
METHOD FOR THE PRODUCTION OF A FILTER LAYER, AND FILTER LAYER ESPECIALLY FOR A DUST FILTER BAG OF A VACUUM CLEANER
PROCEDE DE PRODUCTION D'UNE COUCHE FILTRANTE ET COUCHE FILTRANTE DESTINEE EN PARTICULIER A UN SAC FILTRE A POUSSIERE D'UN ASPIRATEUR

(30) Priorität: 24.09.2004 DE 102004046669
(43) Veröffentlichungstag der Anmeldung: 06.06.2007
(73) Patentinhaber: Vorwerk & Co. Interholding GmbH, 42275 Wuppertal (DE)
(72) Erfinder: RODEMANN, Thomas, Singapur 276484 (SG); POCH, Heike, 42853 Remscheid (DE); SINSEL, Reinhold, 63619 Bad Orb (DE); SCHLEICHER, Norbert, 36119 Neuhof (DE); HLAWATSCHEK, Hubert, 36460 Kieselbach (DE)
(74) Vertreter: Müller, Enno
(86) Internationale Anmeldenummer: PCT/EP2005/054799
(87) Internationale Veröffentlichungsnummer: WO 2006/032706

(56) Entgegenhaltungen:
- EP-A- 0 641 588
- EP-A- 0 993 854
- EP-A- 1 258 277
- EP-A- 1 362 627
- DE-A1- 4 125 250

## Beschreibung

Die Erfindung betrifft zunächst ein Verfahren zum Herstellen einer, integrierte Grob- und Feinfiltereigenschaften aufweisenden Filterlage, insbesondere für einen Staubfilterbeutel eines Staubsaugers.

Filterlagen, insbesondere für einen Staubfilterbeutel eines Staubsaugers sind aus speziellem Filterpapier und/oder verschiedenen textilen Flächengebilden meist mehrlagig aufgebaut. So kommen beispielsweise Air-Laid-Vliesstoffe, Spinnvliese, Melt-Blown oder auch Stapelfaservliese für die Lagen zum Einsatz. Ziel der Kombination von mehreren Lagen unterschiedlicher Filtermedien ist es, eine hohe Staubspeicherfähigkeit bei gleichzeitiger guter Filtereffektivität, insbesondere im Hinblick auf Feinststaub, zu erreichen. Hierzu wird herkömmlich die Rohgasseite des Filteraufbaus durch Medienlagen mit höherer Luftdurchlässigkeit und geringerem Abscheidegrad gebildet, um zunächst gröbere Partikel abzuscheiden. In Strömungsrichtung dahinter liegend folgen Medienlagen mit geringerer Luftdurchlässigkeit und höherem Abscheidegrad zur Feinststaubabscheidung. Die zur Grob- bzw. Vorfiltration verwendeten Filtermedien bestehen im allgemeinen aus gröberen Fasern und weisen relativ große Porenvolumen auf. Im Vergleich hierzu bestehen die Medien zur Fein bzw. Nachfiltration in der Regel aus feineren Fasern und haben entsprechend ein geringeres Porenvolumen. Eine zusätzlich äußere Lage oder auch eine äußere Filterlage übernimmt des Weiteren Stütz- und Schutzfunktionen für die empfindlicheren inneren Lagen, weist demzufolge eine hohe mechanische Stabilität, insbesondere Reißfestigkeit auf. Darüber hinaus ist es auch bekannt, im Inneren des Filterbeutels eine Schutzlage vorzusehen, um das darunter liegende Filtermedium vor Zerstörung durch abrasives Sauggut schützen zu können. Die Filtereffektivität solcher Schutz- und Stützlagen ist meist gering. Als Material für diese Trägerlagen finden vornehmlich Papier oder Spunbond Verwendung. Die einzelnen Lagen sind mindestens im Bereich des Randes durch Schweißung, insbesondere durch Ultraschallschweißung miteinander verbunden. Bekannt ist es auch, die Lagen auch innerhalb der Filterfläche durch Laminieren oder durch in der Fläche verteilte Schweißpunkte miteinander zu verbinden.

Ausgehend von dem dargelegten Stand der Technik stellt sich der Erfindung die Aufgabe, ein vorteilhaftes Verfahren zur Herstellung einer Filterlage sowie eine vorteilhafte Filterlage anzugeben.

Diese Aufgabe ist verfahrensmäßig dadurch gelöst, dass zunächst ein verfestigter Faserflor aus Fasern mit synthetischen Fasern, Viskosefasern, Zellwollfasern und/oder Naturfasern hergestellt und nachfolgend Melt-Blown-Fasern auf den Faserflor aufgetragen und ihrerseits mit dem Faserflor verfestigt werden, wobei die Melt-Blown-Fasern fragmentartig und in unterschiedlichen Tiefen in den Faserflor eingearbeitet werden. Zufolge dieses erfindungsgemäßen Verfahrens ist eine Filterlage herstellbar, welche die gewünschten Grob- und Feinfiltereigenschaften und darüber hinaus bevorzugt auch die gewünschten Stütz- bzw. Schutzeigenschaften in nur einer Lage vereint. Es werden in nur einer integrierten Filterlage über deren Dicke unterschiedliche Eigenschaften geschaffen. Das Filtermedium kann hierzu im Einzelnen graduell aufgebaut sein, was durch den Eintrag der Melt-Blown-Fasern in den Faserflor in unterschiedlichen Tiefen erreicht ist. Gleichsam stufenartig - über die Tiefe - ergeben sich unterschiedliche Eigenschaften. Hierbei können die "Stufen" auch so fein gesetzt sein, dass sich eine praktisch lineare Eigenschaftsänderung ergibt. Die Faserfeinheit und die Filtereffektivität der einlagigen Filterlage nimmt zufolge des erfindungsgemäßen Herstellungsverfahrens in Strömungsrichtung zu. In einer Filtermedienlage ist somit eine Kombination von hoher Filtereffektivität und guter Staubspeicherfähigkeit erreicht, dies gleichzeitig bei Grob- und Feinfiltereigenschaften der nur einen Filterlage. Hierbei nimmt der Feinfaseranteil in Strömungsrichtung zu, bevorzugt bei gleichzeitigem Abnehmen des Grobfaseranteils und entsprechender Abnahme der Porösität, bei definierter Faserzusammensetzung in jedem Querschnitt. Als besonders vorteilhaft erweist sich die Kombination von Schutz- und Stützfunktion mit Filtereigenschaften in nur einer Filterlage, welche Schutz- und Stützfunktionen gleichfalls durch die fragmentartig in unterschiedlichen Tiefen in den Faserflor eingearbeiteten Melt-Blown-Fasern erreicht werden. Das Verfahren ist gegenüber dem bekannten Stand der Technik durch die Konfektionierung nur einer Filterlage vereinfacht.

Die Gegenstände der weiteren Ansprüche sind nachstehend in Bezug zu dem Gegenstand des Anspruchs 1 erläutert, können aber auch in ihrer unabhängigen Formulierung von Bedeutung sein.

Zunächst können die Melt-Blown-Fasern und die Fasern des Faserflors über die Dicke der Filterlage einen gegenläufigen Dichtegradienten aufweisen. Die Dichte ändert sich jeweils im Wesentlichen kontinuierlich über die Dicke. In einfachster Form linear, wobei entsprechend der Gradient konstant ist. Die Dichte kann aber auch einer Kurve höherer Ordnung folgen.

Verfahrenstechnisch ist bevorzugt weiter vorgesehen, dass der Faserflor vernadelt wird. Das Vormaterial für die Filterlage wird entsprechend aus einem Faserflor hergestellt, der bevorzugt über eine Krempel läuft und anschließend weiter bevorzugt durch eine Ober-/Unter-Nadelstation von beiden Seiten vernadelt wird. In einer nachfolgenden Station werden die Melt-Blown-Fasern zugeführt, welche gleichfalls mittels spezieller Nadeln in den Faserflor eingenadelt werden. Die Melt-Blown-Fasern liegen zunächst bevorzugt praktisch als zusammenhängende Lage vor, werden dann aber im Zuge der Einnadelung in den Faserflor zerrissen oder jedenfalls fragmentiert. Zur Einarbeitung mittels Einnadelung dient bevorzugt eine zweite Ober-/Unter-Nadelstation. Dabei werden die Melt-Blown-Fasern als Lage vollständig fragmentiert und mittels der Nadeln in den Faserflor in unterschiedliche Tiefen eingearbeitet. Beim Fragmentierprozess entstehen kleine Fasern oder Faserballen mit bzw. aus Melt-Blown-Fasern, die in die Hohlräume zwischen die groberen Fasern des genadelten Faserflors eingebracht werden. Der Anteil der feineren Fasern nimmt nach einer Seite, der Abströmseite, des neu entstehenden Nadelvlieses (Filterlage) zu, während der Anteil der groben Fasern abnimmt. Insbesondere wird hierdurch ein deutlicher Anstieg von Faseranteilen < 10 µm in der Filterlage bewirkt. Durch das Einbringen von Feinstfaseranteilen in z. B. mehreren Ebenen des Faserflors wird eine starke Verschiebung der Porengrößenwerte hervorgerufen. In dem Faserflor, der als Nadelvliesstoff ausgebildet ist, ohne Melt-Blown-Anteile, ist das Verhältnis der größten Poren zu mittleren Poren bspw. 2 :1 (z. B. haben größte Poren eine Öffnung von 60 µm, mittlere Poren eine solche von 30 µm). Durch das Einbringen der Melt-Blown-Fasern verschiebt sich das Porengrößenverhältnis der größten Poren zu mittleren Poren auf ein Verhältnis von ca. 6 :1 (z. B. größte Pore 60 µm, mittlere Pore 10 µm), d. h. die mittleren Poren reduzieren sich deutlich in ihrem Durchmesser. Diese Tatsache bewirkt, dass trotz eines gewissen Anteils an Poren feinste Partikel zurückgehalten werden, bei einem ebenfalls hohen Luftdurchlass. Im Hinblick auf die genannte graduelle Verschiebung der Eigenschaften über die Tiefe kann also auch, ggf. kombiniert mit anderen Stufen, ein Porengrößenverhältnis von 3 :1, 4 :1, 5 : 1 oder auch 7 :1 und 8 :1 etc. verwirklicht sein.

Hierdurch entsteht eine Anströmseite mit vorwiegend groben Fasern und eine Abströmseite mit vorwiegend feinen Fasern. Bezüglich der Melt-Blown-Fasern können verschiedene Materialien zur Anwendung kommen, so beispielsweise Polypropylen, Polyethylen, Polystyrol, Polycarbonat, Polyurethan, Polyamid, Polyethylenterephthalat, Polyphenylsiloxane, Polybuthylenterephthalat oder eine Mischung aus verschiedenen Materialien. Die durch dieses Verfahren herstellbare Filterlage weist eine Luftdurchlässigkeit von 200 bis 5001/dm² x min auf, dies bei einem bevorzugten Flächengewicht von 100 bis 300 g/m² und einer Dicke von bevorzugt 1,0 bis 3,0 mm.

Weiter bevorzugte Werte sind hierbei in Schritten von je 10 l/dm² als 210 bis 500 oder 200 bis 490, 220 bis 500 oder 200 bis 480 usw. l/dm² hinsichtlich der Luftdurchlässigkeit. Desgleichen hinsichtlich der Flächengewichte in Schritten von 10 g/m², können also Werte von 100 bis 290 bzw. 110 bis 300 oder 120 bis 300 oder 100 bis 280 g/m² verwirklicht sein. Nicht zuletzt auch hinsichtlich der Dicken, nämlich bspw. 1,1 bis 3,0 oder 1,0 bis 2,9 bzw. 1,2 bis 3,0 oder 1,0 bis 2,8 mm usw.

Es handelt sich hierbei um einen einschichtigen Nadelvliesstoff mit eingebrachten Feinstfasersegmenten. Die Staubpartikel lagern sich primär an die Feinstfasersegmente an (große Faseroberfläche und elektrostatische Ladung), woraus eine längere Standzeit des aus der Filterlage zu formenden Staubfilterbeutels resultiert, da die Luft die vorerst noch freien Vliesstoffporen passieren kann. Durch die gezielte Verteilung der Feinstfasersegmente über die Dicke des Nadelvliesstoffes ist eine Erhöhung der Filterwirkung erreicht. Der Faserflor weist für sich gesehen eine Luftdurchlässigkeit von 100 bis 1500 L/ dm²x min auf, dies bei einem bevorzugten Flächengewicht von 100 bis 300 g/m² und einer bevorzugten Dicke von 0,8 bis 3 mm. Die Fasern des Faserflors weisen bevorzugt eine Dicke von 3 bis 50 µm (0,1 dtex bis 17 dtex) auf. Eine bevorzugte Stapellänge der Fasern des Faserflors beträgt 30 bis 100 mm. Die Melt-Blown-Fasern sind Mikrofasern mit einer bevorzugten Dicke von 0,1 bis 10 µm, wobei bei Fasern aus Polybuthylenterephthalat eine Dicke von 0,5 bis 3,0 µm bevorzugt wird. Weiter wird vorgeschlagen, dass die Melt-Blown-Fasern eine Länge von weniger als 30 mm aufweisen. Das unfragmentierte Melt-Blown-Gebilde weist für sich gesehen eine Luftdurchlässigkeit von 50 bis 2000 L/dm² x min auf, dies bei einem bevorzugten Flächengewicht von 5 bis 100 g/m² und einer Dicke von bevorzugt 0,8 bis 3,0 mm.

Auch die vorstehend genannten Luftdurchlässigkeiten (100 bis 1500 l/dm² x min.) bzw. Flächengewichte und Dicken, auch der Fasern, können in der schon erwähnten Stufung jeweils bevorzugt eingeschränkt gegeben sein. Gleiches betrifft die angegebenen bevorzugte Stapellänge der Fasern.

Die Erfindung betrifft des Weiteren eine, integrierte Grob- und Feinfiltereigenschaften aufweisende Filterlage, insbesondere für einen Staubfilterbeutel eines Staubsaugers, welche Filterlage zur Verbesserung der Filtereigenschaften bei vereinfachtem Aufbau eine über die Dicke zunehmende Filterwirkung aufweist, wobei anströmseitig zunächst ein vernadelter Vliesstoff vorliegt und über die Dicke der Filterlage dann weiterhin in den Vliesstoff in fragmentierter Form Melt-Blown-Faseranhäufungen eingebracht sind. So ist erreicht, dass in einem aus einer solchen Filterlage hergestellten Staubfilterbeutel mit einer Fläche von beispielsweise 2000 cm² und einem Volumen von 4,5 L mindestens 1400 g DMT-Teststaub (V8) und 350 g Normsand nach IEC 60312 gespeichert werden können, ohne dass bei einem Volumenstrom von 10 L/sec ein Druckverlust von 80 hPa überschritten wird. Die erfindungsgemäße Filterlage vereint die Grob- und Feinfiltereigenschaften und darüber hinaus auch bevorzugt Stütz- und Schutzfunktionen in nur einer Lage, was durch das Einbringen von Melt-Blown-Fasern in unterschiedlichen Tiefen in den Vliesstoff erreicht ist. Es ist eine gute Filtereffektivität erreicht. Die nachfolgend aufgeführte Tabelle zeigt anhand eines Beispiels die Filtereffektivität bei einer Medienanströmgeschwindigkeit von 0,2 m/sec.

| Partikelgröße | Max. Durchlassgrad |
|---|---|
| 0,3 - 0,4 µm | 7% |
| 0,4 - 0,5 µm | 11 % |
| 0,5 - 0,7 µm | 12 % |
| 0,7 - 1,0 µm | 9 % |
| 1,0 - 1,5 µm | 9% |
| 1,5 - 3,0 µm | 3% |

Die erfindungsgemäße Filterlage ist bevorzugt gemäß dem zuvor beschriebenen erfindungsgemäßen Verfahren hergestellt. Auf die näheren Ausführungen hinsichtlich der Luftdurchlässigkeit, Flächengewicht, Dicke, Stapellänge etc. der Fasern bzw. Lagen/Gebilde wird hiermit nochmals Bezug genommen. Es ist ein Filtermedium geschaffen, welches eine ausreichende mechanische Festigkeit besitzt und somit auf üblichen Konfektionsanlagen ohne die Verwendung einer Stützlage gefertigt werden kann und welche eine robuste Handhabung beim Gebrauch eines Staubfilterbeutels erlaubt. Die Abriebfestigkeit des Filtermediums insbesondere auf der Beutelinnenseite ist ausreichend hoch, um keine Beschädigung bei der Aufnahme von abrasivem Sauggut zu ermöglichen.

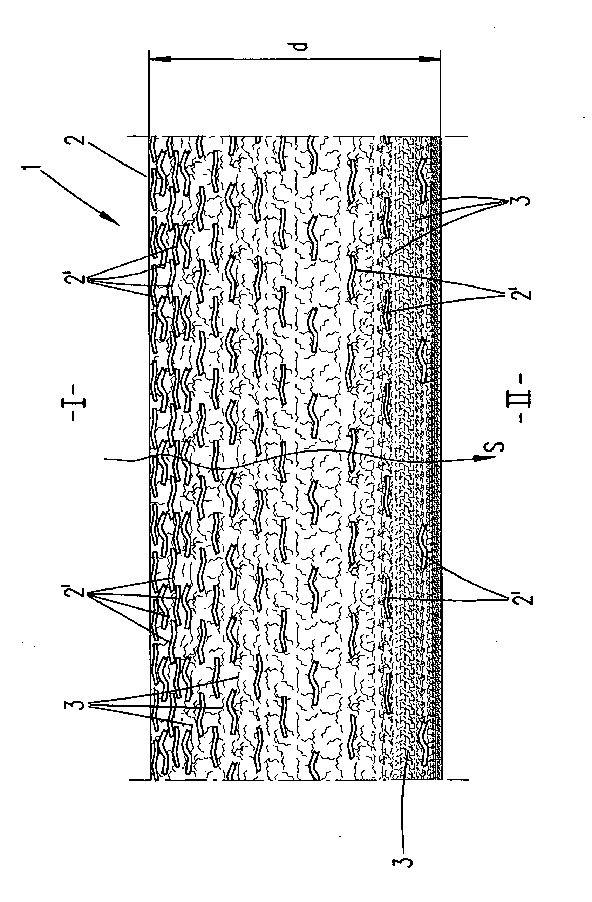

Nachstehend ist die Erfindung anhand der beigefügten Zeichnung, welche lediglich ein Ausführungsbeispiel darstellt, näher erläutert.

Die schematische Darstellung zeigt einen Querschnitt durch eine erfindungsgemäß hergestellte Filterlage 1, insbesondere für einen Staubfilterbeutel eines Staubsaugers, mit einer über die Dicke d (Pfeil S) zunehmenden Filterwirkung.

Die Filterlage 1 weist eine Anströmseite I und eine Abströmseite II auf.

Die Filterlage 1 besteht zunächst aus einem genadelten Faserflor 2 mit Fasern 2' wie synthetischen Fasern, Viskosefasern, Zellwollfasern oder Naturfasern. Fragmentierte Melt-Blown-Fasern 3 sind in unterschiedlichen Tiefen in den Faserflor 2 eingearbeitet, so bevorzugt eingenadelt. Beim Fragmentierprozess entstehen kleine Faserballen mit Melt-Blown Fasern 3, die in die Hohlräume zwischen die groberen Fasern 2' des genadelten Faserflors 2 eingebracht werden. Der Anteil der feinen Fasern (Melt-Blown-Fasern 3) nimmt nach einer Seite (Anströmseite I) der neu entstandenen Filterlage 1 hin ab, während der Anteil der groben Fasern (Fasern 2' des Faserflors 2) zunimmt. Dadurch entsteht eine Anströmseite I mit vorwiegend groben Fasern und eine Abströmseite II mit vorwiegend feinen Fasern.

Es ist ein Filtermedium geschaffen, welches graduell aufgebaut ist, wobei die Faserfeinheit und die Filtereffektivität in Strömungsrichtung (Pfeil S) zunimmt. Entsprechend nimmt auch die Dichte der eingenadelten Melt-Blown-Fasern 3 in das genadelte Faserflor in Strömungsrichtung s mit zunehmender Dicke der Filterlage 1 zu.

Die Einarbeitung der Melt-Blown-Fasern in die Filterlage 1 ist so vorgenommen, dass sich ein gegenläufiger Dichtegradient der Fasern 2' und der Melt-Blown-Fasern 3 einstellt.

## Patentansprüche

1. Verfahren zum Herstellen einer integrierte Grob- und Feinfiltereigenschaften aufweisenden Filterlage (1), insbesondere für einen Staubfilterbeutel eines Staubsaugers, wobei zunächst ein verfestigter Faserflor (2) aus Fasern (2') wie synthetischen Fasern, Viskosefasern, Zellwollfasern oder Naturfasern hergestellt wird und nachfolgend Melt-Blown-Fasern (3) auf oder in den Faserflor (2) auf-/eingetragen und ihrerseits mit dem Faserflor (2) verfestigt werden, wobei die Melt-Blown-Fasern (3) fragmentartig und bevorzugt in unterschiedlichen Tiefen in den Faserflor (2) eingearbeitet werden.

2. Verfahren nach Anspruch 1, **dadurch gekennzeichnet, dass** die Melt-Blown-Fasern (3) in das Faserflor (2) derart eingearbeitet werden, dass sie zu den Fasern (2') des Faserflors (2) einen gegenläufigen Dichtegradienten aufweisen.

3. Verfahren nach einem der vorhergehenden Ansprüche, **dadurch gekennzeichnet, dass** die Einarbeitung derart ist, dass die Dichte der Fasern (2') von der Anströmseite zur Abströmseite hin abnimmt.

4. Verfahren nach einem der vorhergehendenAnsprüche, **dadurch gekennzeichnet, dass** der Faserflor (2) vemadelt wird.

5. Verfahren nach einem der vorhergehenden Ansprüche, **dadurch gekennzeichnet, dass** die Melt-Blown-Fasern (3) in den Faserflor (2) eingenadelt werden.

6. Verfahren nach einem der vorhergehenden Ansprüche, **dadurch gekennzeichnet, dass** die Filterlage (1) eine einstellbare Luftdurchlässigkeit von 200 bis 500 L/dm² x min und/oder ein Flächengewicht von 100 bis 300 g/m² und/oder eine Dicke von 0,8 bis 5,0 mm aufweist.

7. Verfahren nach einem der vorhergehenden Ansprüche oder insbesondere danach, **dadurch gekennzeichnet, dass** der Faserflor (2) für sich gesehen eine Luftdurchlässigkeit von 100 bis 1500 L/dm² x min und/oder ein Flächengewicht von 100 bis 300 g/m² und/oder eine Dicke von 0,5 bis 5,00 mm aufweist.

8. Verfahren nach einem der vorhergehenden Ansprüche oder insbesondere danach, **dadurch gekennzeichnet, dass** die Fasern (2') des Faserflors (2) einen Durchmesser von 0,5 bis 50 µm und/oder eine Stapellänge von 30 bis 100 mm aufweisen.

9. Verfahren nach einem der vorhergehenden Ansprüche, **dadurch gekennzeichnet, dass** die Melt-Blown-Fasern (3) Mikrofasern sind und einen Durchmesser von 01, bis 10,0 µm aufweisen.

10. Verfahren nach einem der vorhergehenden Ansprüche, **dadurch gekennzeichnet, dass** die Melt-Blown-Fasern (3) eine Länge von weniger als 30 mm aufweisen.

11. Verfahren nach einem der vorhergehenden Ansprüche, **dadurch gekennzeichnet, dass** das unfragmentierte Melt-Blown-Gebilde für sich gesehen eine Luftdurchlässigkeit von 50 bis 2000 L/dm² x min aufweist.

12. Verfahren nach einem der vorhergehenden Ansprüche, **dadurch gekennzeichnet, dass** das Melt-Blown-Gebilde für sich gesehen ein Flächengewicht von 5 bis 100 g/m² aufweist.

13. Verfahren nach einem der vorhergehenden Ansprüche, **dadurch gekennzeichnet, dass** das Melt-Blown-Gebilde für sich gesehen eine Dicke von 0,1 bis 2,0 mm aufweist.

14. Integrierte Grob- und Feinfiltereigenschaften aufweisende Filterlage (1), insbesondere für einen Staubfilterbeutel eines Staubsaugers, mit einer über die Dicke (d) zunehmenden Filterwirkung, wobei anströmseitig zunächst ein vernadelter Vliesstoff vorliegt und über die Dicke (d) der Filterlage (1) dann weiterhin in den Vliesstoff in fragmentierter Form Melt-Blown-Faseranhäufungen eingebracht sind.

## Claims

1. Method for producing an integrated filter layer (1) having coarse and fine filter properties, in particular for a dust filter bag of a vacuum cleaner, a compacted fibrous web (2) being initially produced from fibres (2') such as synthetic fibres, viscose fibres, rayon staple fibres or natural fibres, and melt-blown fibres (3) being subsequently applied to/introduced into the fibrous web (2), and these being compacted with the fibrous web (2), the melt-blown fibres being incorporated into the fibrous web (2) in fragmented form and preferably at different depths.

2. Method according to Claim 1, **characterised in that** the melt-blown fibres (3) are incorporated into the fibrous web (2) in such a manner that they have a density gradient which is opposite to the fibres (2') of the fibrous web (2).

3. Method according to one of the preceding claims, **characterised in that** the incorporation is such that the density of the fibres (2') decreases from the inflow side towards the outflow side.

4. Method according to one of the preceding claims, **characterised in that** the fibrous web (2) is needle-punched.

5. Method according to one of the preceding claims, **characterised in that** the melt-blown fibres (3) are needle-punched into the fibrous web (2).

6. Method according to one of the preceding claims, **characterised in that** the filter layer (1) has an adjustable permeability to air of 200 to 500 L/dm² x min and/or has a weight of 100 to 300 g/m² and/or a thickness of 0.8 to 5.0 mm.

7. Method according to one of the preceding claims, **characterised in that** the fibrous web (2), considered on its own, has a permeability to air of 100 to 1500 L/dm² x min and/or a weight of 100 to 300 g/m² and/or a thickness of 0.5 to 5.00 mm.

8. Method according to one of the preceding claims, **characterised in that** the fibres (2') of the fibrous web (2) have a diameter of 0.5 to 50 µm and/or a staple length of 30 to 100 mm.

9. Method according to one of the preceding claims, **characterised in that** the melt-blown fibres (3) are microfilms and have a diameter of 01,0 to 10.0 µm.

10. Method according to one of the preceding claims, **characterised in that** the melt-blown fibres (3) have a length of less than 30 mm.

11. Method according to one of the preceding claims, **characterised in that** the unfragmented melt-blown fabric, considered on its own, has a permeability to air of 50 to 2000 L/dm² x min.

12. Method according to one of the preceding claims, **characterised in that** the melt-blown fabric, considered on its own, has a weight of 5 to 100 g/m².

13. Method according to one of the preceding claims, **characterised in that** the melt-blown fabric, considered on its own, has a thickness of 0.1 to 2.0 mm.

14. An integrated filter layer (1) having coarse and fine filter properties, in particular for a dust filter bag of a vacuum cleaner, with a filter effect that increases over the thickness (d), a needle-punched non-woven fabric being initially present at the inflow side and melt-blown fibre clusters being furthermore then introduced in fragmented form into the non-woven fabric over the thickness (d) of the filter layer (1).

## Revendications

1. Procédé de fabrication d'une couche filtrante (1) intégrée, présentant des propriétés de filtration grossière et fine, en particulier pour un sac filtre à poussière d'un aspirateur, dans lequel, d'abord, un voile de fibres (2) consolidé, composé de fibres (2') telles que des fibres synthétiques, des fibres de viscose, des fibres de laine artificielle, ou des fibres naturelles est fabriqué et, ensuite, des fibres obtenues par extrusion-soufflage (3) sont appliquées sur ou intégrées dans le voile de fibres (2) et, de leur côté, consolidées avec le voile de fibres (2), les fibres obtenues par extrusion-soufflage (3) étant intégrées à la manière de fragments et, de préférence, à des profondeurs différentes dans le voile de fibres (2).

2. Procédé selon la revendication 1, **caractérisé en ce que** les fibres obtenues par extrusion-soufflage (3) sont intégrées dans le voile de fibres (2) de manière qu'elles présentent un gradient de densité évoluant sens inverse par rapport aux fibres (2') du voile de fibres (2).

3. Procédé selon l'une des revendications précédentes, **caractérisé en ce que** l'intégration est telle que la densité des fibres (2') va en diminuant, en évoluant de la face d'arrivée d'écoulement à la face de sortie d'écoulement.

4. Procédé selon l'une des revendications précédentes, **caractérisé en ce que** le voile de fibres (2) est aiguilleté.

5. Procédé selon l'une des revendications précédentes, **caractérisé en ce que** les fibres obtenues par extrusion-soufflage (3) sont intégrées dans le voile de fibres (2) par aiguilletage.

6. Procédé selon l'une des revendications précédentes, **caractérisé en ce que** la couche filtrante (1) présente une perméabilité à l'air réglable, dans la fourchette de 200 à 500 L/dm²xmin et/ou un poids surfacique compris dans la fourchette de 100 à 300 g/m² et/ou une épaisseur comprise dans la fourchette de 0,8 à à 5,0 mm.

7. Procédé selon l'une des revendications précédentes, **caractérisé en ce que** le voile de fibres (2), considéré en soi, présente une perméabilité à l'air dans la fourchette de 100 à 1500 L/dm²xmin et/ou un poids surfacique compris dans la fourchette de 100 à 300 g/m² et/ou une épaisseur comprise dans la fourchette de 0,5 à 5,00 mm.

8. Procédé selon l'une des revendications précédentes, **caractérisé en ce que** les fibres (2') du voile de fibres (2) présentent un diamètre compris dans la fourchette de 0,5 à 50 µm et/ou une longueur de fibre comprise dans la fourchette de 30 à 100 mm.

9. Procédé selon l'une des revendications précédentes, **caractérisé en ce que** les fibres obtenues par extrusion-soufflage (3) sont des microfibres et présentent un diamètre compris dans la fourchette de 0,1 à 10,0 µm.

10. Procédé selon l'une des revendications précédentes, **caractérisé en ce que** les fibres obtenues par extrusion-soufflage (3) présentent une longueur inférieure à 30 mm.

11. Procédé selon l'une des revendications précédentes, **caractérisé en ce que** la structure obtenue par extrusion-soufflage non fragmentée, considérée en soi, présente une perméabilité à l'air comprise dans la fourchette de 50 à 2000 L/dm²xmin.

12. Procédé selon l'une des revendications précédentes, **caractérisé en ce que** la structure obtenue par extrusion-soufflage, considérée en soi, présente un poids surfacique compris dans la fourchette de 5 à 100 g/m².

13. Procédé selon l'une des revendications précédentes, **caractérisé en ce que** la structure obtenue par extrusion-soufflage, considérée en soi, présente une épaisseur comprise dans la fourchette de 0,1 à 2,0 mm.

14. Couche filtrante (1) intégrée, présentant des propriétés de filtration grossière et fine, en particulier pour un sac filtre à poussière d'un aspirateur, avec un effet filtrant alla nt en augmentant sur la valeur de l'épaisseur (d), où, du côté arrivée de l'écoulement, on trouve d'abord une étoffe nappée aiguilletée et ensuite, sur la valeur de l'épaisseur (d) de la couche filtrante (1), des accumulations de fibres obtenues par extrusion-soufflage sont intégrées, sous forme fragmentée, dans l'étoffe nappée.
